# FASCICULE DE BREVET EUROPEEN

(11) **EP 3 233 457 B1**
(45) Date de publication et mention de la délivrance du brevet: **03.10.2018**
(21) Numéro de dépôt: 15821073.2
(22) Date de dépôt: 21.12.2015
(51) Int. Cl.: B29D 30/24, B29D 30/32, B29D 30/48

(54) **PROCEDE ET INSTALLATION POUR L'ASSEMBLAGE D'UNE EBAUCHE DE PNEUMATIQUE**
VERFAHREN UND AUSRÜSTUNG ZUR MONTAGE EINES REIFENROHLINGS
METHOD AND EQUIPMENT FOR ASSEMBLING A TIRE BLANK

(30) Priorité: 19.12.2014 FR 1463030
(43) Date de publication de la demande: 25.10.2017
(73) Titulaire: Compagnie Générale des Etablissements Michelin, 63000 Clermont-Ferrand (FR)
(72) Inventeur: HINC, Henri, 63040 Clermont-Ferrand Cedex 9 (FR); BEAUDONNET, Christian, 63040 Clermont-Ferrand Cedex 9 (FR); FAUGERAS, Alain, 63040 Clermont-Ferrand Cedex 9 (FR); BOURNERIE, Philippe, 63040 Clermont-Ferrand Cedex 9 (FR); DETTORRE, Jean-Marie, 63040 Clermont-Ferrand Cedex 9 (FR)
(74) Mandataire: Noel, Luminita
(86) Numéro de dépôt international: PCT/EP2015/080882
(87) Numéro de publication internationale: WO 2016/097424

(56) Documents cités:
- EP-A1- 1 537 986
- EP-A1- 1 547 757
- FR-A1- 2 996 493
- US-A- 3 887 423

## Description

L'invention concerne le domaine de la fabrication des pneumatiques pour véhicules de tourisme ou utilitaires et s'intéresse plus particulièrement aux procédés et installations d'assemblage permettant de poser successivement l'ensemble des constituants d'un tel pneumatique pour arriver de manière efficace à une ébauche de pneumatique prête à être vulcanisée.

Dans les différents procédés et installations, l'ensemble des opérations d'assemblage de l'ébauche de pneumatique sont réalisées sur un tambour dont le diamètre correspond de préférence sensiblement au diamètre intérieur du pneumatique (couramment appelé « diamètre au seat » en référence au diamètre normalisé de la jante sur laquelle le pneumatique sera monté lors de son utilisation). Ainsi, non seulement la carcasse, les bourrelets et les flancs, mais aussi les renforts de sommet et la bande de roulement peuvent être posés sur un tambour d'assemblage dont le diamètre correspond sensiblement au diamètre du seat. Un avantage de ce type de procédé est qu'il peut permettre de conserver l'ébauche du pneumatique sur le même tambour tout au long de son assemblage. L'ébauche complète peut ensuite être directement introduite dans un moule de vulcanisation où elle prend son diamètre extérieur final par l'action d'une pression interne. Un exemple de ce type de procédé est donné dans le document FR1508652.

On appelle conformation la transformation que subit l'ébauche de pneumatique lorsqu'elle passe de sa forme sensiblement tubulaire à la forme généralement toroïdale d'un pneumatique fini. Lors de la conformation, la partie centrale de l'ébauche qui correspond au sommet du pneumatique voit son diamètre augmenter par l'action d'une pression interne alors que les bourrelets sont maintenus au diamètre initial. La différence de circonférence entre le diamètre au seat et le diamètre conformé est généralement comprise entre 30% et 70% et par exemple couramment de l'ordre de 50% pour un pneumatique pour véhicule de tourisme.

Lorsqu'elle ne s'effectue pas dans le moule de vulcanisation, l'opération de conformation de l'ébauche de pneumatique s'effectue sur un tambour d'assemblage. On connaît ainsi les procédés et installations dits « un temps » dans lesquels la conformation de l'ébauche est faite sur un seul tambour. Dans des procédés et installations d'un autre type connus sous le nom « deux temps », la carcasse est fabriquée sur un premier tambour ayant un diamètre adapté au seat, et ensuite elle est transférée sur un deuxième tambour de conformation où elle reçoit le bloc sommet préalablement assemblé sur une forme sommet. L'ébauche de pneumatique obtenue à un diamètre proche du diamètre final du pneumatique est ensuite introduite dans le moule de vulcanisation.

Dans ces différents procédés et installations de fabrication de pneumatiques, les outillages sont conçus en fonction de l'architecture du pneumatique qui impose l'ordre d'assemblage des différents produits qui constituent l'ébauche, en fonction du diamètre du seat du pneumatique et également en fonction de la distance qui sépare les deux tringles. De ce fait, pour une gamme de pneumatiques par exemple de tourisme, il faut concevoir et fabriquer une pluralité de tambours, les différents tambours étant à charger et à régler sur la machine d'assemblage en fonction des caractéristiques du pneumatique à fabriquer. Une solution alternative est l'utilisation d'un tambour complexe, tel que généralement connu, mais qui reste toutefois adapté à la fabrication d'ébauches de pneumatique dans une gamme de diamètres du seat et une gamme de distances entre les tringles préétablies.

Par ailleurs, après la pose des tringles, les extrémités ou bords des nappes de gomme qui entrent dans la constitution de l'ébauche et sont préalablement déposées sur le tambour, notamment la nappe carcasse, doivent être retroussés sur les tringles. Pour ceci, le tambour doit être muni de dispositifs de retroussage qui sont, pour la plupart, munis de membranes gonflables montées fixes sur le tambour. Lorsqu'elles sont gonflées, elles retroussent les extrémités des nappes sur les tringles. Un tel dispositif de retroussage à membrane est complexe et cher, surtout qu'il est adapté à une dimension de pneumatique et s'avère d'une maintenance délicate. De surcroît, un dispositif de retroussage à membrane gonflable n'arrive pas à plier correctement les composants de l'ébauche dont la longueur des extrémités à plier présente des variations après la pose ou alors lorsque les extrémités à plier sont trop rigides, par exemple lors du retroussage d'une nappe carcasse métallique.

Les documents EP 1 537 986 A1 et EP 1 547 757 A1 montrent de tels dispositifs.

On connaît par ailleurs des dispositifs de retroussage comportant des systèmes mécaniques exempts de membrane gonflable. Un tel exemple est le dispositif de retroussage du document US 3 887 423 dont le tambour comprend une pluralité de doigts circonférentiels montés pivotants autour d'un axe perpendiculaire à l'axe de rotation du tambour, et également à possibilité de déplacement en translation parallèlement à l'axe du tambour. Ce système présente comme inconvénient le fait d'être monté sur le tambour et, de ce fait, être limité à une dimension de pneumatique. De surcroît, il ne convient pas à l'utilisation avec une machine d'assemblage à plusieurs postes, le tambour étant alors encombrant et cher.

Pour pallier à ce problème, le dispositif de retroussage peut être disposé à l'extérieur du tambour. Un tel dispositif est décrit dans le document US 4 362 592 et convient à l'utilisation avec une machine d'assemblage automatique à plusieurs postes d'assemblage. Le dispositif comprend deux ensembles de retroussage comportant chacun plusieurs doigts circonférentiels et disposés au voisinage des extrémités axiales du tambour. L'extrémité des doigts de chaque ensemble comporte des roulettes et les doigts sont actionnés, moyennant un vérin hydraulique et un mécanisme à came, pour se déplacer radialement et axialement par rapport au tambour afin de soulever l'extrémité de la nappe carcasse, puis la plier sur les tringles. Tout en étant d'une maintenance plus aisée et permettant, certes, de développer un mouvement de plus grande amplitude que ceux des dispositifs précédents, son utilisation est toutefois limitée à une architecture de pneu donnée et à la présence d'une seule nappe à retrousser dont la longueur est supérieure à celle du tambour.

Ainsi, avec des exigences imposées par l'assemblage d'un produit complexe, l'industrie du pneumatique est tributaire de l'existence d'un parc de tambours plus ou moins complexes qui sont à stocker, à monter sur une machine d'assemblage ou à remplacer et régler lors du lancement d'un pneumatique ou d'une série de pneumatiques d'une gamme donnée. Ceci implique des coûts de fabrication et des temps de cycle élevés.

L'invention a donc pour objectif de pallier l'un au moins des inconvénients décrits ci-dessus.

L'invention propose pour cela un procédé et une installation permettant la pose des différents composants d'une ébauche de pneumatique, on comprend les composants d'une carcasse ou d'une ébauche complète, sur un tambour expansible simplifié. On parle de carcasse pour désigner la partie de l'ébauche qui ne comporte pas le bloc sommet.

L'invention propose donc un procédé d'assemblage d'ébauche de pneumatique, comprenant successivement des étapes consistant à :
- poser des nappes de gomme sur un tambour composé de secteurs mobiles radialement entre une position étendue et une position collapsée du tambour, secteurs qui forment la face circonférentielle externe du tambour d'axe principal,
- poser des tringles
- soulever les bords des nappes s'étendant axialement au-delà des tringles vers les extrémités du tambour à l'aide d'ailerons s'étendant axialement et disposés circonférentiellement autour de l'axe principal,
- plier les bords des nappes par des éléments à roulettes indépendants du tambour qui se déplacent dans la direction axiale sur la face circonférentielle du tambour pour retrousser les bords des nappes autour de la tringle,
- dans lequel on déplace lesdits ailerons dans des entailles longitudinales s'étendant parallèlement à l'axe aux extrémités des secteurs pour soulever les bords des nappes de gomme posées sur le tambour avant d'être pliées.

Ainsi, selon l'invention, on arrive à poser sur un tambour expansible en diamètre un ou plusieurs composants de l'ébauche (gomme intérieure, nappe carcasse, protecteurs sous forme de bandelettes de gomme, etc.) dans un ordre voulu, les différents produits pouvant être rendus solidaires l'un de l'autre par roulettage sur toute leur longueur en exerçant une pression sur la face circonférentielle externe du tambour. Une fois les tringles posées sur le tambour, les extrémités des différents produits posés sur le tambour sont soulevées à l'aide des ailerons, puis pliées à l'aide des éléments à roulette. De par le fait que les secteurs du tambour sont rainurés, les ailerons peuvent soulever plusieurs produits posés sur le tambour et supportés par celui-ci, notamment en vue d'un roulettage. De surcroît, le dispositif de pliage ou retroussage des nappes autour des tringles étant rendu indépendant du tambour, il peut être utilisé pour retrousser les bords des nappes autour des tringles tout en s'adaptant à une pluralité de distances entre les tringles. De ce fait, le tambour se prête à l'assemblage d'une pluralité de dimensions de pneumatiques.

De surcroît, les bords soulevés et retroussés selon le procédé de l'invention peuvent comporter plusieurs nappes collées entre elles, les nappes pouvant comporter chacune des renforts textiles ou métalliques. Les ailerons du dispositif de l'invention sont suffisamment rigides et robustes pour pouvoir soulever un complexe de nappes en vue du retroussage par un dispositif indépendant du tambour. Le tambour et les dispositifs associés dans le cadre du procédé de l'invention peuvent donc être utilisés pour réaliser des pneumatiques ayant différentes architectures (l'architecture étant définie par l'agencement et la composition de l'ensemble des nappes qui forment l'ébauche) en plus de la possibilité de variation de leur dimension offerte par ce procédé, ce qui augmente encore plus le nombre de possibilités de fabrication selon le procédé d'assemblage de l'invention. On arrive ainsi à proposer un procédé d'assemblage selon l'invention qui est très flexible et s'adapte à différentes exigences de fabrication.

De préférence, on pose les différents composants à assembler sur un tambour exempt de gorges. Ceci permet de s'affranchir de la distance entre les tringles et donc, le tambour étant par ailleurs expansible en diamètre, de confectionner plusieurs dimensions de pneumatique sur un seul tambour, par exemple en posant les tringles à l'aide du bras d'un robot à un emplacement préétabli sur le tambour.

De préférence encore, les tringles sont formées par enroulement d'un câble métallique sur le tambour. Ceci permet de confectionner une tringle in situ et, en choisissant de manière adéquate le nombre de tours à enrouler, à mieux adapter la tringle au pneumatique à assembler.

De préférence encore, on commence la pose d'au moins un premier produit à un diamètre inférieur à celui du seat. Ceci permet de mettre en tension le ou les premiers produits posés sur le tambour qui est ensuite gonflé au diamètre du seat qui correspond à la pose des produits de référence, dont les tringles.

Dans une réalisation avantageuse de l'invention, on enroule une bandelette ondulée en hélice sur l'ébauche de pneumatique afin de constituer en une pluralité de tours une armature de frettage du sommet du pneumatique, la bandelette ondulée présentant une sur-longueur donnée permettant la conformation de l'ébauche. Ceci permet d'assembler à plat, sur un même tambour, tous les composants de l'ébauche de pneumatique avant sa conformation.

De préférence, on pose tous les composants du bloc sommet et on finalise l'ébauche avant de collapser le tambour. On pose ainsi au moins une bandelette de renforcement ondulée par enroulement sur le tambour, ainsi qu'au moins une nappe de renfort métallique, la bande de roulement et les flancs pour obtenir une ébauche apte à être conformée directement dans un moule de vulcanisation. Le tambour est ensuite collapsé afin de pouvoir extraire l'ébauche et l'envoyer en vulcanisation.

L'invention propose également une installation pour la mise en oeuvre d'un tel procédé, ladite installation comprenant un tambour entraîné en rotation autour d'un axe principal, ledit tambour étant apte à supporter une ébauche de pneumatique réalisée par la pose successive de composants crus sur la face circonférentielle externe du tambour composée de secteurs mobiles radialement entre une position étendue et une position collapsée du tambour, ledit tambour étant placé en regard d'un dispositif de retroussage indépendant du tambour, ledit dispositif étant apte à retrousser les bords des nappes de gomme posées sur le tambour autour d'une tringle par des éléments à roulettes qui sont montés mobiles dans la direction axiale sur la face circonférentielle du tambour, dans laquelle chaque extrémité de secteur comporte une entaille longitudinale s'étendant parallèlement à l'axe, l'entaille étant amenée à coopérer avec un aileron qui s'étend parallèlement à l'axe et qui est amené à se déplacer dans ladite entaille pour soulever les bords des nappes de gomme s'étendant axialement au-delà des tringles vers les extrémités du tambour en vue de leur retroussage.

L'installation de l'invention permet d'optimiser les fonctions de chaque dispositif qui la compose et aussi la fonctionnalité de l'ensemble de ces dispositifs de manière à ce qu'elle soit flexible et adaptée à l'assemblage d'une pluralité d'ébauches en terme de dimensions et d'architectures du pneumatique à fabriquer.

De préférence, l'installation comprend un tambour expansible exempt de gorges.

De préférence encore, lesdits ailerons sont montés sur un dispositif de levage comportant des moyens d'entraînement aptes à déplacer les ailerons dans une direction axiale et/ou dans une direction radiale.

De préférence encore, ledit dispositif de levage est indépendant du tambour.

De préférence encore, ledit dispositif de retroussage comporte une pluralité de bras articulés circonférentiels comportant les roulettes, lesdits bras étant montés mobiles radialement et axialement par rapport au tambour.

De préférence encore les éléments à roulettes et les ailerons sont montés sur un support commun mobile en translation longitudinale par rapport au tambour et solidaire des moyens d'entraînement adaptés pour déplacer les éléments à roulettes et les ailerons dans la même direction, mais de manière décalée dans le temps.

La description qui suit permet de mieux comprendre le procédé selon l'invention ainsi que la structure et le fonctionnement d'une installation selon des modes préférés de réalisation de l'invention et s'appuie sur les figures 1 à 12 dans lesquelles :
- la figure 1 est une en vue en perspective d'un tambour selon un mode de réalisation de l'invention, un seul secteur étant représenté pour supporter l'ébauche de pneumatique ;
- les figures 2a à 2f sont des vues schématiques en coupe du tambour de la figure 1 illustrant les différentes étapes du procédé de l'invention,
- les figures 3a à 3c sont des vues en perspective illustrant des détails des différents dispositifs de l'installation en action lors des différentes étapes du procédé de l'invention,
- la figure 4 est une vue perspective d'un exemple de réalisation de l'installation de l'invention utilisant le tambour de la figure 1, le tambour étant écarté du dispositif de retroussage,
- la figure 5 est une vue perspective d'un secteur de retroussage de l'installation de la figure 4 avant l'étape de retroussage du procédé de l'invention,
- la figure 6 est une vue en perspective d'un dispositif de relevage de l'installation de la figure 4,
- la figure 7 est une vue en perspective de l'installation de la figure 4, le tambour étant raccordé au dispositif de retroussage,
- les figures 8 à 11 illustrent en perspective les différents composants de l'installation lors de l'opération de retroussage.

Sur les différentes figures, les éléments identiques ou similaires portent les mêmes références. La description de la structure et de la fonction de ces éléments identiques ou similaires n'est donc pas systématiquement reprise.

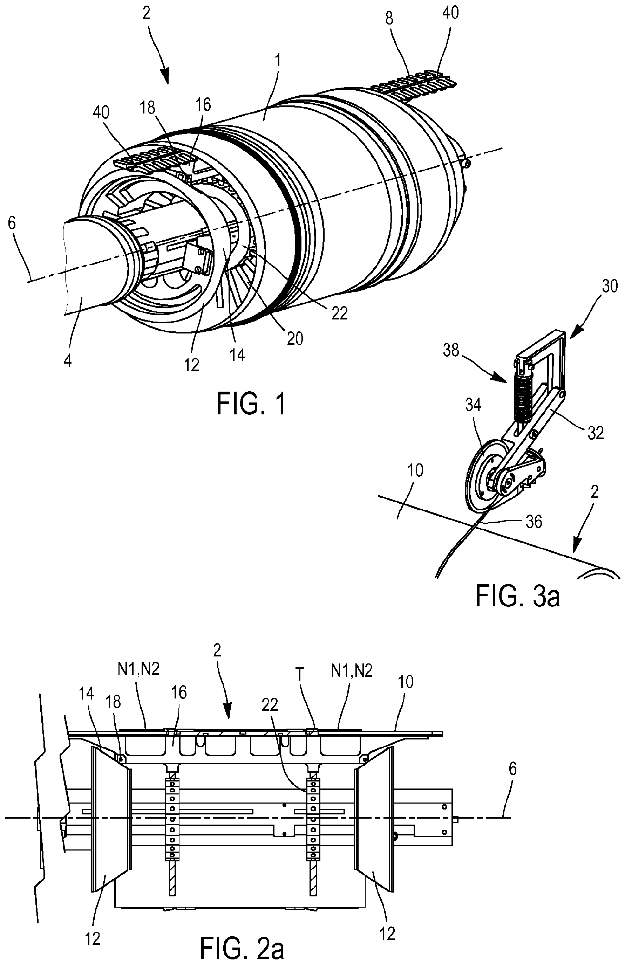

Sur la figure 1 on voit un tambour 2 selon un mode de réalisation de l'invention. Ce tambour sert à l'assemblage des composants qui forment une ébauche de pneumatique pour un véhicule de tourisme ou un véhicule utilitaire. Le tambour 2 comprend un support central ou fût 4 et présente une forme générale à géométrie de révolution d'axe 6 qui forme l'axe principal du tambour. Dans ce qui suit, on comprend par axiale ou longitudinale une direction parallèle à l'axe 6 du tambour et par radiale une direction radiale, perpendiculaire, à ce dernier.

Le tambour 6 présente des secteurs 8 externes ou tuiles qui s'étendent en périphérie du tambour pour former la face circonférentielle externe 10 du tambour qui définit la face de travail sur laquelle sont disposés les composants de l'ébauche. Cette face a une forme générale cylindrique à section circulaire dans un plan perpendiculaire à l'axe 6. Cette face permet la pose dite « à plat » des différents composants de l'ébauche. Les secteurs 8 sont tous identiques entre eux, sont agencés dans la direction circonférentielle du tambour et ils sont dans le présent exemple au nombre de 24, ce nombre pouvant varier. Dans cet exemple, chaque secteur est rigide et formé d'une seule pièce ayant une forme générale de peigne. Le secteur 8 a une forme générale rectangulaire de longueur (on comprend la plus grande dimension) parallèle à l'axe 6 et dont les bords longitudinaux sont découpés pour former des dentures de sorte que les dents du bord d'un peigne puissent s'imbriquer avec les dents du bord du peigne adjacent. Les secteurs étant mobiles suivant une direction radiale par rapport à l'axe 6, la forme en peigne des secteurs permet de faire varier leur distance par rapport à l'axe, tout en assurant une certaine continuité de matière entre les peignes suivant la direction circonférentielle du tambour.

Les secteurs 8 sont reliés au tambour par des organes assurant leur guidage et leur entraînement. Dans l'exemple illustré aux figures, ces organes comprennent deux cames 12 centrées sur l'axe 6 du tambour présentant chacune deux faces latérales perpendiculaires à l'axe 6 délimitant entre elles une surface conique 14. Les cames 12 sont identiques, elles sont disposées en miroir par rapport à un plan médian central du tambour perpendiculaire à l'axe 6 de ce dernier, l'une en partie droite et l'autre en partie gauche du tambour et à possibilité de déplacement axial. Chaque secteur 8 est rigidement fixé à un support 16 de secteur. Les supports 16 sont dans l'exemple représenté en nombre de 24, leur nombre pouvant varier. Le support 16 a une forme allongée suivant une direction parallèle à l'axe 6 et présente au voisinage de chaque extrémité un galet 18 qui suit la surface circonférentielle inclinée 14 de la came 12. Chaque support 16 est relié par deux tiges 20 rigides à un anneau 22 centré sur l'axe 6 du tambour monté rotatif avec ce dernier. Les tiges 20 glissent dans des ouvertures radiales prévues à cet effet au sein de l'anneau 22 et assurent le guidage radial des secteurs 8 Les secteurs sont maintenus au contact des cames à l'aide d'un moyen élastique (non illustré), par exemple une membrane souple. Les cames sont entraînées en un déplacement axial symétrique de part et d'autre du plan médian du tambour, par exemple en les reliant à un mécanisme du type à vis et écrou, l'une des extrémités de la vis ayant un pas à droite et l'autre un pas à gauche et la vis étant entraînée en rotation avec le tambour 2. Les cames 12, les supports 16, les tiges 20 et les anneaux 22 forment des moyens d'expansion-collapsage du tambour 2. Pour passer de la position collapsée à la position expansée du tambour, on commande le déplacement axial des cames 12 dans le sens de leur rapprochement qui se fait de façon symétrique par rapport au plan médian du tambour et suivant l'axe 6. Ce mouvement engendre le coulissement radial du support 16 et donc du secteur 8 suivant la direction perpendiculaire à l'axe 6. Ce mouvement est le même et a lieu simultanément pour tous les secteurs 8 du tambour, faisant que le tambour 2 conserve sa forme cylindrique pour tous les changements de diamètre du tambour.

Les pièces du tambour sont métalliques, ou en matière plastique voire composite, la plupart étant en acier ou en aluminium, la surface en contact avec la gomme des secteurs 8 étant traitée en fonction des conditions de fonctionnement (par exemple pour la rendre adhérente à la gomme ou pas). Dans une variante, certaines pièces peuvent être réalisées en une matière plastique ou composite pour plus de rigidité.

D'autres systèmes d'entraînement des secteurs pour passer de la position collapsée à la position expansée et vice-versa peuvent être envisagés, tels des vérins électriques ou hydrauliques d'actionnement en déplacement axial des cames, voire des cames rotatives munies de sillons dans lesquels circulent des galets reliés aux secteurs, etc.

Selon une caractéristique avantageuse de l'invention, le tambour 2 présente une face circonférentielle externe 10 de forme générale cylindrique exempte de gorges de réception de tringles. Lorsqu'il est utilisé pour confectionner des ébauches de pneumatiques de tourisme ou utilitaire, le tambour de l'invention a de préférence un diamètre supérieur à 250mm et une longueur supérieure à 700mm ou, plus généralement, le rapport longueur/diamètre du tambour doit être supérieur à 2,5.

Un tel tambour permet non seulement de confectionner des ébauches de pneumatique dans une plage large des diamètres au seat, mais également, de par l'absence de gorges, dans une plage large des dimensions de l'entre tringles (on comprend la distance qui sépare les deux tringles lors de la confection de l'ébauche). Les tringles sont alors posées dans une position précise sur le tambour à l'aide d'un bras robotisé ou elles sont confectionnées in situ, lors de la pose sur le tambour.

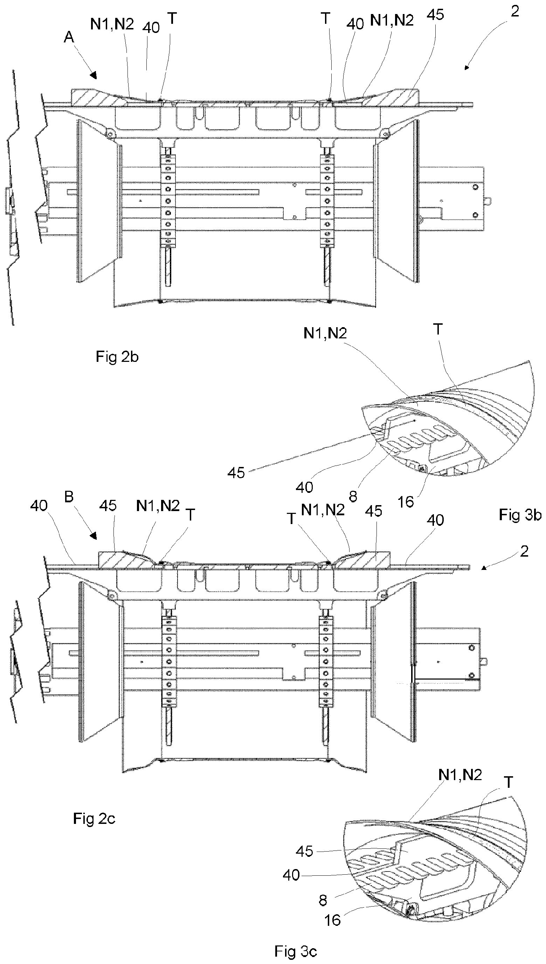

La figure 3a illustre un dispositif d'enroulement 30 de câble 36 de tringle sur la face circonférentielle externe 10 du tambour 2, celle-ci étant déjà recouverte par des composants en gomme de l'ébauche, par exemple une ou plusieurs nappes, des bandelettes de gomme, etc. tel qu'il sera expliqué par la suite. Le dispositif d'enroulement 30 comporte un support 32 monté à possibilité de déplacement radial et axial par rapport au tambour, et portant une bobine 34 de câble 36 de tringle, de préférence un câble métallique gainé de gomme, ainsi qu'un moyen de mise sous tension 38 du câble 36. Le support est amené en position axiale et radiale par rapport au tambour 2 et la bobine 34 est mise en rotation par un moteur (non représenté) afin d'enrouler le câble 36 à une tension donnée sur le tambour, plusieurs tours étant ainsi effectués en fonction du type et des dimensions du pneumatique. La structure de la tringle ainsi obtenue est sous forme de plusieurs tours jointifs en une ou plusieurs couches superposées. Pour une meilleure stabilité de l'ensemble formant tringle, l'enroulement de la couche supérieure est de préférence en décalage d'une distance égale au rayon du câble et comporte un nombre inférieur de tours que la couche de base. A titre d'exemple, pour un pneumatique dont le diamètre au seat est compris entre 14 et 16", le nombre de tours est de préférence entre 5 et 20, pour une pose en deux ou trois couches en utilisant un câble ayant un diamètre du fil métallique d'environ 1,5mm.

Pour la suite des opérations, le tambour 6 coopère avec un dispositif de retroussage 60 qui est indépendant du tambour et qui vient rabattre et rouletter les extrémités des composants de la carcasse autour des tringles.

Plus particulièrement selon l'invention, le tambour présente plusieurs entailles longitudinales 40, qui sont des rainures uniformément réparties sur sa circonférence, et sont prévues pour coopérer avec des ailerons mobiles 45 qui sont agencés à possibilité de déplacement par rapport aux entailles 40 de manière à pouvoir soulever les bords longitudinaux de l'ébauche 1 en vue de leur retroussage autour des tringles. Les entailles 40 sont des fentes longitudinales réalisées au centre de chaque secteur 8, sur une distance préétablie à chacune des extrémités longitudinales d'un secteur. La longueur d'une fente est de préférence inférieure au quart de la longueur d'un secteur 8. Les fentes peuvent être débouchantes ou non, en fonction du mouvement des ailerons et elles ont toutes une même largeur.

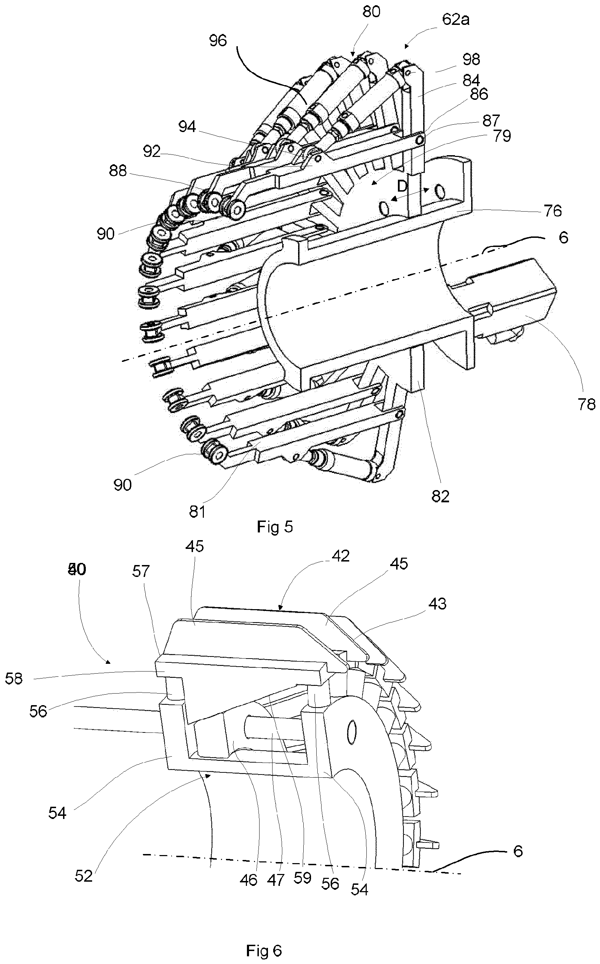

Dans un mode de réalisation de l'invention et tel que mieux visible à la figure 6, les ailerons 45 constituent les éléments saillants d'un dispositif de levage 50. Le dispositif de levage 50 a pour rôle de déplacer les ailerons 45 pour obtenir un changement de niveau dans la direction radiale d'au moins un point de leur partie saillante. Le dispositif de levage 50 comprend un support annulaire 52 centré par rapport à l'axe 6 du tambour. La section transversale du support annulaire 52 a une forme en U dont les branches sont constituées par deux flasques latéraux 54 de faces perpendiculaires à l'axe 6. Les flasques 54 comportent une pluralité d'orifices disposés radialement et qui forment des paliers de guidage pour des tiges 56 radiales de support des organes 58 disposés sur la circonférence du support 52. L'organe 58 comporte une face externe 57 sensiblement plane de support d'un aileron 45 qui est monté par exemple en force dans une rainure longitudinale de cette dernière. Plusieurs ailerons 45 sont ainsi montés, dans l'exemple illustré ils sont au nombre de 24, en étant uniformément répartis sur la circonférence du support annulaire 52. L'organe 58 comporte par ailleurs une face interne conique 59 venant en contact avec un anneau conique 46 centré sur l'axe 6, par exemple sous la force d'un ressort (non visible sur les dessins). L'anneau conique 46 est monté à possibilité de déplacement en translation longitudinale sur des barres 47 tenues par les flasques 54. Le déplacement en translation de l'anneau conique 46 est réalisé en vue d'obtenir un réglage de la position radiale des ailerons 45 et est obtenu par exemple moyennant un dispositif à vis (constituée par exemple par la barre 47) et écrou (constitué par exemple par un orifice fileté dans l'anneau conique 46). Le réglage de la position radiale se fait simultanément pour tous les ailerons 45 et permet d'adapter le diamètre de la face circonférentielle externe 42 du dispositif de levage 50 au diamètre du tambour expansible 6.

Dans l'exemple représenté aux figures les ailerons 45 ont une forme générale plate de profil trapézoïdal et comportent une partie d'attaque orientée en direction du tambour 6 qui a une arrête inclinée 43 formant un angle compris entre 30 et 45° avec la direction axiale. Les ailerons sont identiques et uniformément répartis circonférentiellement. L'épaisseur d'un aileron 45 est inférieure à celle d'une entaille 40 de manière à ce que l'aileron puisse se déplacer dans l'entaille. Cet angle est choisi de manière à pouvoir relever les bords des nappes de manière à ce que les bords puissent être entraînés par les roulettes du dispositif de retroussage. Selon l'invention également, les ailerons 45 sont montés mobiles axialement et/ou radialement. Dans ce but, on utilise un premier actionneur, tel, par exemple, un vérin électrique qui déplace en translation longitudinale le support 52 seul ou en combinaison avec un actionneur qui déplace en translation longitudinale l'anneau conique 46.

Dans l'exemple représenté aux figures, le dispositif de levage 50 est intégré au dispositif de retroussage 60 qui est indépendant du rouleau, tel qu'il sera expliqué par la suite. Toutefois, dans une variante de réalisation de l'invention (non représentée), le dispositif de levage peut être monté sur le tambour 6, en étant agencé avec ses actionneurs aux extrémités et à l'intérieur de ce dernier. Dans un exemple de réalisation non représenté aux figures, lorsque le dispositif est intégré au tambour, les ailerons 45 sont remplacés par des tiges qui font saillie à travers les entailles 40 à l'extrémité du tambour, au-delà des tringles. Ces tiges sont alors commandées pour se déplacer axialement pour la mise en position et radialement pour soulever les bords des composants, les deux déplacements pouvant être combinés ou dissociés.

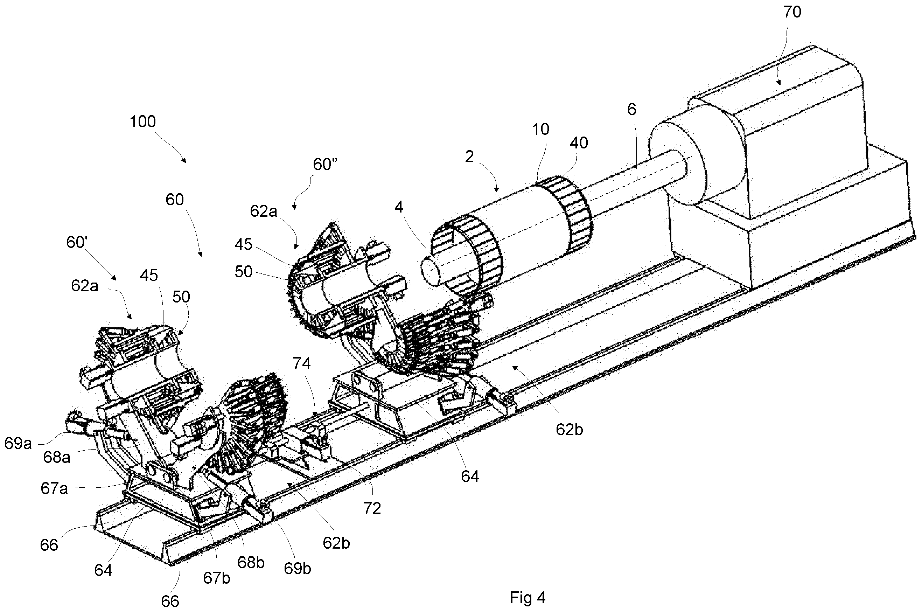

On va maintenant expliquer, en référence aux figures 4 et 5, la structure et le fonctionnement du dispositif de retroussage 60. Le dispositif de retroussage 60 comprend deux têtes de retroussage 60', 60" identiques montées sur un support commun et comportant chacune une pluralité de bras articulés 80 circonférentiels identiques qui sont adaptés pour coopérer avec la face externe 10 du tambour 2. Dans l'exemple illustré aux figures, le dispositif 60 est prévu pour coopérer avec un tambour 6 dans le cadre d'une machine automatique à plusieurs postes d'assemblage. Le tambour 6 qui arrive au niveau du poste de retroussage de a figure 4 comporte déjà les différentes nappes de gomme et les tringles posés sur la face externe circonférentielle 10, les entailles 40 étant apparentes au-delà des bords longitudinaux des nappes de gomme. Les têtes de retroussage 60', 60" comportent chacune un support 64 monté coulissant longitudinalement le long des rails de guidage 66 qui supportent également l'unité 70 de support et d'entraînement du tambour 6. Chaque tête de retroussage est formée de deux secteurs 62a et 62b montés chacun sur un support 68a, 68b à possibilité de pivotement chacun autour d'un axe 67a, 67b. Les axes 67a, 67b sont parallèles entre eux et parallèles à l'axe 6. Lorsqu'ils sont actionnés par des vérins 69a, 69b, les secteurs 62a, 62b s'ouvrent pour laisser passer le tambour 6 et se referment ensuite. Les deux supports 64 des têtes 60', 60" sont entraînés en un mouvement de translation longitudinale le long des rails de guidage 66 par un vérin électrique 72 moyennant un mécanisme du type vis et écrou 74.

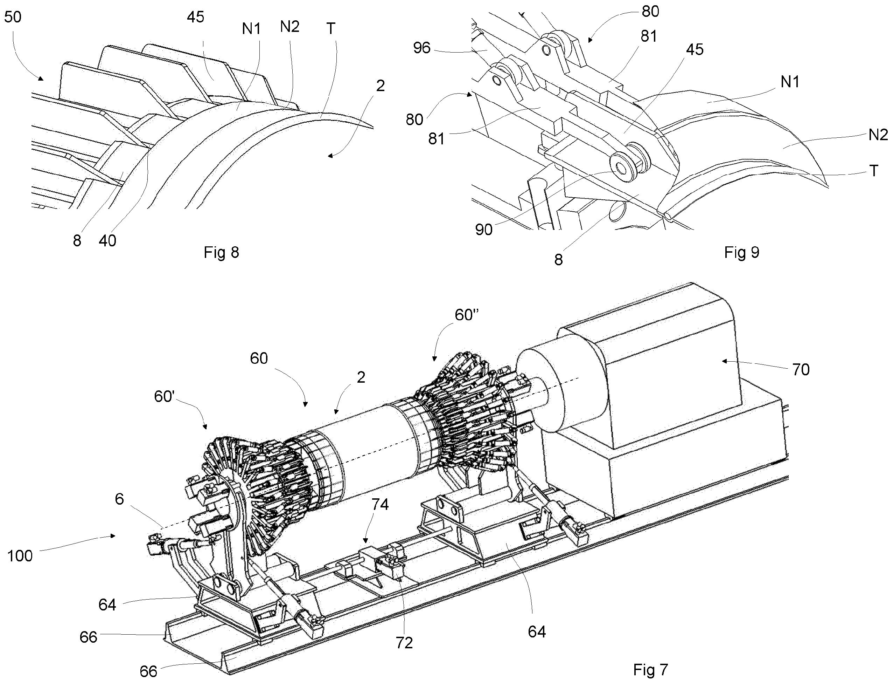

On va présenter dans ce qui suit les organes qui relient les bras articulés 80 au support et qui assurent leur guidage et leur entraînement. On va décrire en détail les organes qui se trouvent en partie droite du tambour sur les figures 4 et 7, sachant que le tambour coopère en partie gauche avec des organes analogues s'étendant symétriquement aux premiers par rapport à un plan de symétrie médian perpendiculaire à l'axe 6. Les bras articulés 80 sont supportés par un flasque 82 dont les faces sont perpendiculaires à l'axe 6, le flasque étant monté coulissant et centré sur un manchon tubulaire 76, centré, lui, sur l'axe 6, adapté pour recevoir le fut 4 du tambour 6. Le flasque 82 comporte une pluralité de bras radiaux 84 uniformément répartis sur sa circonférence, chaque bras radial 84 formant support pour un bras articulé 80. Plus particulièrement dans l'exemple représenté aux figures, le bras articulé 80 comporte un corps rigide 81 de forme allongée dans la direction axiale et comporte deux extrémités : une extrémité de montage 86 sur un bras radial 84 et une extrémité active 88 légèrement inclinée radialement qui comporte une paire de roulettes 90 montées libres en rotation autour d'un axe perpendiculaire à la direction longitudinale du corps 81. Le bras articulé 88 est monté à possibilité de pivotement par rapport au bras radial 84 autour d'une articulation d'axe 87 s'étendant selon une direction perpendiculaire à l'axe 6. Pour l'actionnement du bras articulé 80, un vérin électrique 96 est monté pivotant, autour d'axes parallèles entre eux et perpendiculaires l'axe 6, entre l'extrémité externe du bras radial 84 et la partie centrale du corps 81. Lorsqu'il est actionné, le vérin 96 provoque le déplacement en direction radiale de l'extrémité active 88 du bras articulé 80. Le flasque 82 est par ailleurs relié à un vérin électrique 78 qui assure, moyennant un mécanisme à vis et écrou (non illustré) son déplacement en translation longitudinale dans le sens des flèches D sur la figure 5. En fonctionnement, lorsque les vérins 96 sont actionnés, ils provoquent le rapprochement et la mise en contact des roulettes 90 avec la face externe circonférentielle 10 du tambour 6, le déplacement du flasque 82 permettant le déplacement en translation longitudinale des roulettes sur le tambour, selon un séquencement qui sera expliqué par la suite.

L'installation 100 de l'invention est illustrée à la figure 7 avec les différents composants prêts à effectuer les opérations imparties, notamment le tambour étant amené en position pour coopérer avec le dispositif de retroussage 60. Pour ceci, le tambour 2 a été azimuté avec les têtes de retroussage 60' et 60", on comprend que la position angulaire des secteurs compris dans le plan méridien du tambour a été ajustée pour être mise en concordance avec celle des bras articulés 80 situés dans un même plan. En effet, tel que mieux visible à la figure 8, les ailerons 45 du dispositif de levage 50 doivent être positionnés en face des entailles longitudinales 40 du tambour 2, les bras articulés 80 du dispositif de retroussage 60 étant eux placés de part et d'autre de chaque aileron 45 (figure 9). Pour réaliser l'azimutage on utilise par exemple un capteur optique sur le tambour et des moyens de lecture optique sur les têtes 60', 60" (ou vice-versa), voire un capteur du type codeur rotatif absolu relié au rotor du moteur d'entraînement en rotation du tambour.

Afin de réaliser un bon retroussage, et tel que mieux visible à la figure 9, deux bras articulés 80 agissent de part et d'autre d'un aileron 45. Chaque tête de retroussage 60', 60" comporte ainsi deux fois plus de bras articulés 80 que d'entailles longitudinales 40 ou de secteurs 8 présents sur le tambour 2. Par ailleurs, dans le mode de réalisation illustré aux figures, un dispositif de levage 50 est intégré à chaque tête de retroussage 60', 60" et, de ce fait, on ménage un espace annulaire 79 de réception d'un dispositif de levage 50 dans la partie avant (qui regarde le tambour) de chaque tête de retroussage 60', 60" (fig. 4 et fig. 5). Le dispositif de levage 50 est monté fixe sur le manchon tubulaire 76 et se déplace avec ce dernier.

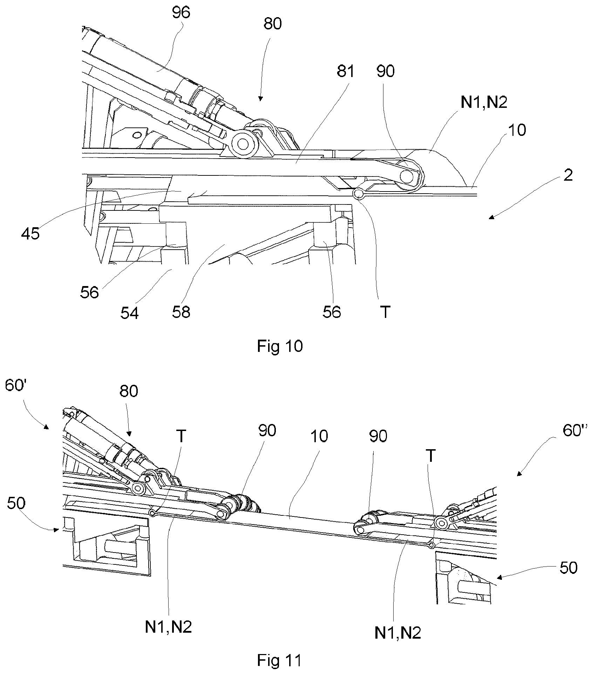

On va décrire en ce qui suit le fonctionnement de l'installation 100 de l'invention. Le tambour 2 arrive au voisinage du poste de retroussage de la machine d'assemblege, tel que visible à la figure 4, les secteurs 62a et 62b des têtes de retroussage 60',60" étant écartés pour laisser passer le tambour 2 à travers la tête 60". Dans l'exemple illustré, de la même manière que les têtes de retroussage sur lesquelles il est monté, le dispositif de levage est réalisé également sous forme de deux secteurs identiques et symétriques par rapport à un plan vertical passant par l'axe 6. Une fois le tambour 2 en place à mi-distance entre les deux têtes de retroussage, les secteurs 62a, 62b se referment autour du fut 4 du tambour 2. Le tambour 2 est ensuite mis en rotation pour réaliser son azimutage ou son positionnement angulaire correct par rapport aux bras articulés des têtes de retroussage, cette position étant illustrée à la figure 7. Ensuite les têtes de retroussage 60',60" sont déplacées en translation longitudinale l'une vers l'autre simultanément et de manière symétrique à l'aide du vérin 72 et du système à vis et écrou 74 de manière à amener le dispositif de levage 50 à proximité du tambour 2. On ajuste le diamètre du dispositif de réglage comme expliqué précédemment au diamètre du tambour 2. On déplace ensuite les ailerons 45 du dispositif 50 dans les entailles longitudinales 40 du tambour 2 pour arriver au contact des bords longitudinaux de différentes nappes à base de gomme posées sur celui-ci. Cette action des ailerons 45 est mieux visible à la figure 8, ces derniers étant sur le point d'attaquer le bord d'une première nappe de gomme N1(par exemple une gomme appelée protecteur tringle) située en dessous d'une deuxième nappe N2 (par exemple une nappe carcasse) qui supporte, elle, la tringle T. De par le profil d'attaque des ailerons 45, les bords des nappes N1, N2 glissent sur les arrêtes des ailerons 45 et commencent à remonter par rapport à la tringle T. Les têtes de retroussage 60',60" sont déplacées en translation longitudinale en direction du tambour 2, faisant que les roulettes 90 suivent les ailerons et passent sous les nappes N1, N2. Les ailerons s'arrêtent de préférence au contact des tringles T, et les roulettes 90 continuent d'avancer pour réaliser le retroussage. De préférence, au contact de la tringle, les bras articulés 80 sont écartés radialement par leurs actionneurs 86 de manière à suivre le contour de la tringle T. Ensuite, les bras articulés 80 se rétractent radialement de manière à ce que les roulettes 90 puissent avancer en exerçant une pression sur le tambour 2 pour refouler les bords des nappes N1,N2 en direction du centre du tambour 2 (fig. 10). On déplace ensuite les roulettes 90 sur le tambour 2, de manière à ce que la pression exercée chasse l'air emprisonné entre les nappes lors du retroussage.

Dans une variante, on choisit de déplacer les roulettes 90 sur la face externe du tambour sans exercer de pression afin de faciliter le passage des tringles, et d'exercer ensuite une pression sur les bords retroussés des nappes afin de chasser les bulles d'air emprisonnées entre les nappes.

La figure 11 illustre la fin de l'opération de retroussage. On peut maintenant commander l'écartement des roulettes par rapport du tambour en ouvrant radialement les bras et en faisant reculer longitudinalement les têtes de retroussage 60',60" avec les dispositifs de levage 50, ensuite ouvrir les secteurs 62a, 62b pour permettre le retrait du tambour 2. Le tambour peut maintenant retourner à un autre poste de confection de la machine d'assemblage.

De préférence avant le retrait du tambour, des moyens de roulettage exercent une pression supplémentaire en passant sur les plis ou bords retroussés pour finir de chasser l'air et mieux les coller contre la surface de l'ébauche.

Sur les figures 2a à 2f on voit les étapes essentielles du procédé selon l'invention.

La figure 2a illustre de manière schématique le tambour 2 en phase de début de confection d'ébauche, son diamètre étant ajusté au diamètre qui correspond à celui du seat moins l'épaisseur des nappes à poser sous la tringle. Dans une variante, le diamètre du tambour dans cette étape est légèrement inférieur si l'on veut imposer une certaine tension aux premières nappes posées sur le tambour. On pose ensuite une ou plusieurs nappes, de préférence au moins deux nappes N1, N2, et on effectue un roulettage de ces nappes sur toute leur longueur de manière à les plaquer l'une contre l'autre et à chasser l'air. On pose ensuite les tringles T, comme expliqué auparavant.

Afin de finir la confection de la carcasse de l'ébauche de pneumatique, on doit retrousser les bords des nappes N1,N2 autour des tringles T à l'aide du dispositif de retroussage de l'invention. Le début de l'opération de retroussage est illustré à la figure 2b où l'on observe les ailerons 45 du dispositif de levage se déplaçant dans les entailles longitudinales 40 du tambour pour venir au contact des bords des nappes N1,N2 qu'ils commencent à soulever. La figure 3b illustre à échelle agrandie une vue en perspective du détail A de la figure 2b.

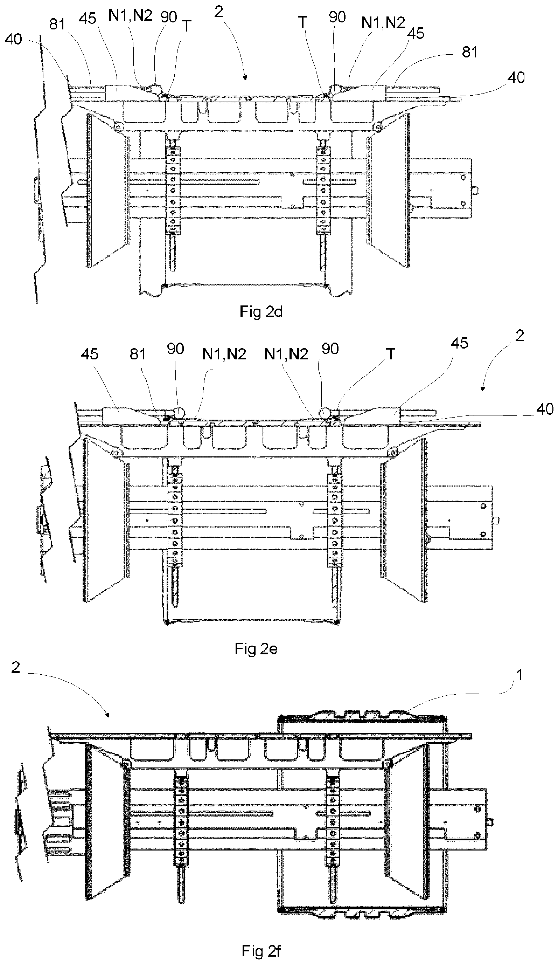

La figure 2c illustre la progression des ailerons 45 dans les entailles 40 du tambour 2, ces derniers s'arrêtant à proximité des tringles T pour laisser place à l'action des roulettes 90 du dispositif de retroussage (fig. 2d). La figure 2e illustre la fin de l'opération de retroussage par les roulettes 90, les bords des nappes N1,N2 étant pliés à 180° par rapport à leur position initiale autour des tringles T.

D'autres nappes à base de gomme peuvent ensuite être posées sur la carcasse ainsi confectionnée, par exemple des nappes constituant les flancs, une bandelette de renfort ondulée, une nappe de renfort et la bande de roulement afin d'obtenir une ébauche complète 1. La figure 2f illustre la fin de l'opération de confection de l'ébauche complète 1 qui peut être retirée en collapsant le tambour 2. L'ébauche ainsi obtenue est envoyée dans l'atelier de vulcanisation où elle est introduite à l'intérieur d'un moule de vulcanisation, à l'intérieur de laquelle a lieu la conformation et la cuisson du pneumatique.

Le dispositif de retroussage et le dispositif de levage de l'invention peuvent être utilisés avec tout autre type de tambour du moment qu'il présente des entailles adaptées pour coopérer avec des ailerons du dispositif de levage afin de permettre l'action des roulettes du dispositif de retroussage.

## Revendications

1. Procédé d'assemblage d'une ébauche de pneumatique, ledit procédé comprenant successivement des étapes consistant à :
- poser des nappes de gomme sur un tambour (2) composé de secteurs (8) mobiles radialement entre une position étendue et une position collapsée du tambour, secteurs qui forment la face circonférentielle externe (10) du tambour (2) d'axe principal (6),
- poser des tringles
- soulever les bords des nappes s'étendant axialement au-delà des tringles vers les extrémités du tambour à l'aide d'ailerons (45) s'étendant axialement et disposés circonférentiellement autour de l'axe principal (6),
- plier les bords des nappes par des éléments à roulettes (90) indépendants du tambour (2) qui se déplacent dans la direction axiale sur la face circonférentielle du tambour pour retrousser les bords des nappes autour de la tringle,
- dans lequel on déplace lesdits ailerons (45) dans des entailles longitudinales (40) s'étendant parallèlement à l'axe (6) aux extrémités des secteurs (8) pour soulever les bords des nappes de gomme posées sur le tambour avant d'être pliées.

2. Procédé selon la revendication 1, dans lequel on pose les différentes nappes de gomme à assembler sont posées sur un tambour (2) exempt de gorges.

3. Procédé selon l'une des revendications 1 ou 2, dans lequel les tringles sont formées par enroulement d'un câble métallique directement sur le tambour (2).

4. Procédé selon l'une des revendications précédentes, dans lequel on commence la pose sur le tambour (2) d'au moins un premier produit à un diamètre inférieur à celui du seat.

5. Procédé selon l'une des revendications précédentes, dans lequel on enroule une bandelette ondulée en hélice sur l'ébauche de pneumatique afin de constituer en une pluralité de tours une armature de frettage du sommet du pneumatique, la bandelette ondulée présentant une sur-longueur donnée permettant la conformation de l'ébauche.

6. Procédé selon l'une des revendications précédentes, **caractérisé en ce que** l'on pose tous les composants du bloc sommet et on finalise l'ébauche avant de collapser le tambour (2).

7. Installation (100) pour la mise en oeuvre du procédé selon l'une des revendications précédentes, ladite installation comprenant un tambour (2) entraîné en rotation autour d'un axe principal (6), ledit tambour étant apte à supporter une ébauche de pneumatique réalisée par la pose successive de composants crus sur la face circonférentielle externe du tambour composée de secteurs (8) mobiles radialement entre une position étendue et une position collapsée du tambour, ledit tambour (2) étant placé en regard d'un dispositif de retroussage (60) indépendant du tambour, ledit dispositif étant apte à
- retrousser les bords des nappes de gomme posées sur le tambour autour d'une tringle par des éléments à roulettes (90) qui sont montés mobiles dans la direction axiale sur la face circonférentielle du tambour,
- dans laquelle chaque extrémité de secteur (8) comporte une entaille longitudinale (40) s'étendant parallèlement à l'axe (6), l'entaille étant amenée à coopérer avec un aileron (45) qui s'étend parallèlement à l'axe (6) et qui est amené à se déplacer dans ladite entaille pour soulever les bords des nappes de gomme s'étendant axialement au-delà des tringles vers les extrémités du tambour (2) en vue de leur retroussage.

8. Installation selon la revendication 7, **caractérisée en ce qu'**elle comprend un tambour (2) expansible exempt de gorges.

9. Installation selon l'une des revendications 7 ou 8, **caractérisée en ce que** lesdits ailerons (45) sont montés sur un dispositif de levage (50) comportant des moyens d'entraînement aptes à déplacer les ailerons dans une direction axiale et/ou dans une direction radiale.

10. Installation selon la revendication 9, **caractérisée en ce que** ledit dispositif de levage (50) est indépendant du tambour (2).

11. Installation selon l'une des revendications 7 à 10, **caractérisée en ce que** ledit dispositif de retroussage (60) comporte une pluralité de bras articulés circonférentiels (80) comportant les roulettes (90), lesdits bras étant montés mobiles radialement et axialement par rapport au tambour (2).

12. Installation selon l'une des revendications 7 à 11, **caractérisée en ce que** les éléments à roulettes (90) et les ailerons (45) sont montés sur un support commun mobile en translation longitudinale par rapport au tambour (2) et solidaire des moyens d'entraînement adaptés pour déplacer les éléments à roulettes (90) et les ailerons dans la même direction, mais de manière décalée dans le temps.

## Patentansprüche

1. Verfahren zur Montage eines Reifenrohlins, wobei das Verfahren nacheinander Schritte umfasst, darin bestehend:
- Gummischichten auf einer Trommel (2) anzuordnen, die aus radial zwischen einer ausgeweiteten Position und einer kollabierten Position der Trommel beweglichen Sektoren (8) besteht, wobei die Sektoren die äußere Umfangsfläche (10) der Trommel (2) mit einer Hauptachse (6) bilden,
- Stangen anzubringen,
- die Ränder der Schichten, die sich axial über die Stangen hinaus zu den Enden der Trommel erstrecken, mit Hilfe von Flügeln (45), die sich axial erstrecken und in Umfangsrichtung um die Hauptachse (6) angeordnet sind, anzuheben,
- die Ränder der Schichten durch von der Trommel (2) unabhängige Rollenelemente (90), die sich in die Axialrichtung auf der Umfangsfläche der Trommel bewegen, zu falzen, um die Ränder der Schichten um die Stange zu schlagen,
- wobei die Flügel (45) in Längskerben (40) bewegt werden, die sich parallel zur Achse (6) an den Enden der Sektoren (8) erstrecken, um die Ränder der Gummischichten, die auf der Trommel angeordnet sind, anzuheben, bevor sie gefalzt werden.

2. Verfahren nach Anspruch 1, bei dem die verschiedenen zu montierenden Gummischichten auf einer Trommel (2) ohne Rillen angeordnet werden.

3. Verfahren nach einem der Ansprüche 1 oder 2, bei dem die Stangen durch Winkeln eines Drahtseils direkt auf die Trommel (2) gebildet sind.

4. Verfahren nach einem der vorhergehenden Ansprüche, bei dem das Anordnen mindestens eines ersten Produkts auf der Trommel (2) mit einem kleineren Durchmesser als jener des Sitzes beginnt.

5. Verfahren nach einem der vorhergehenden Ansprüche, bei dem ein spiralförmig gewelltes Band auf den Reifenrohling gewickelt wird, um in einer Vielzahl von Umdrehungen eine Spiralarmierung des Scheitels des Reifens zu bilden, wobei das gewellte Band eine gegebene Überlänge aufweist, die die Ausbildung des Rohlings ermöglicht.

6. Verfahren nach einem der vorhergehenden Ansprüche, **dadurch gekennzeichnet, dass** alle Komponenten des Scheitelblocks angeordnet und der Rohling fertiggestellt wird, bevor die Trommel (2) kollabiert wird.

7. Anlage (100) für den Einsatz des Verfahrens nach einem der vorhergehenden Ansprüche, wobei die Anlage eine Trommel (2) umfasst, die in Drehung um eine Hauptachse (6) angetrieben wird, wobei die Trommel geeignet ist, einen Reifenrohling zu tragen, der durch das aufeinanderfolgende Anordnen von rohen Komponenten auf der äußeren Umfangsfläche der Trommel hergestellt wird, bestehend aus radial zwischen einer ausgeweiteten Position und einer kollabierten Position der Trommel beweglichen Sektoren (8), wobei die Trommel (2) gegenüber einer von der Trommel unabhängigen Falzvorrichtung (60) angeordnet ist, wobei die Vorrichtung geeignet ist
- die Ränder der Gummischichten, die auf der Trommel um eine Stange angeordnet sind, durch Rollenelemente (90), die in die Axialrichtung auf der Umfangsfläche der Trommel beweglich angeordnet sind, zu falzen,
- wobei jedes Ende eines Sektors (8) eine Längskerbe (40) umfasst, die sich parallel zur Achse (6) erstreckt, wobei die Kerbe veranlasst ist, mit einem Flügel (45) zusammenzuwirken, der sich parallel zur Achse (6) erstreckt und veranlasst ist, sich in der Kerbe zu bewegen, um die Ränder der Gummischichten, die sich axial über die Stangen hinaus erstrecken, zu den Enden der Trommel (2) im Hinblick auf ihr Falzen anzuheben.

8. Anlage nach Anspruch 7, **dadurch gekennzeichnet, dass** sie eine dehnbare Trommel (2) ohne Rillen umfasst.

9. Anlage nach einem der Ansprüche 7 oder 8, **dadurch gekennzeichnet, dass** die Flügel (45) auf einer Hubvorrichtung (50) montiert sind, umfassend Antriebsmittel, die geeignet sind, die Flügel in eine Axialrichtung und/oder in eine Radialrichtung zu bewegen.

10. Anlage nach Anspruch 9, **dadurch gekennzeichnet, dass** die Hubvorrichtung (50) von der Trommel (2) unabhängig ist.

11. Anlage nach einem der Ansprüche 7 bis 10, **dadurch gekennzeichnet, dass** die Falzvorrichtung (60) eine Vielzahl von Umfangsgelenkarmen (80) umfasst, die die Rollen (90) umfassen, wobei die arme radial und axial beweglich in Bezug zur Trommel (2) montiert sind.

12. Anlage nach einem der Ansprüche 7 bis 11, **dadurch gekennzeichnet, dass** die Rollenelemente (90) und die Flügel (45) auf einem gemeinsamen Träger montiert sind, der in Längstranslation n Bezug zur Trommel (2) beweglich und mit den Antriebsmitteln verbunden ist, die geeignet sind, die Rollenelemente (90) und die Flügel in dieselbe Richtung, aber zeitlich versetzt, zu bewegen.

## Claims

1. Method of assembling a green tyre blank, the said method comprising in succession steps involving:
- laying rubber plies on a drum (2) made up of segments (8) that are radially mobile between a drum-expanded and a drum-collapsed position, which segments form the external circumferential face (10) of the drum (2) of main axis (6),
- laying bead wires,
- lifting up the edges of the plies extending axially beyond the bead wires towards the ends of the drum using wings (45) extending axially and arranged circumferentially around the main axis (6),
- folding the edges of the plies using elements involving rollers (90), which elements are independent of the drum (2) and move in the axial direction on the circumferential face of the drum in order to turn the edges of the plies around the bead wire,
- in which the said wings (45) are moved in longitudinal cuts (40) running parallel to the axis (6) at the ends of the segments (8) in order to lift up the edges of the rubber plies that are laid on the drum before they are folded.

2. Method according to Claim 1, in which the various rubber plies that are to be assembled are laid on a drum (2) free of grooves.

3. Method according to one of Claims 1 and 2, in which the bead wires are formed by winding a metal cord directly onto the drum (2).

4. Method according to one of the preceding claims, in which the laying of at least one first product on the drum (2) begins at a diameter smaller than that of the seat.

5. Method according to one of the preceding claims, in which a wavy strip is wound in a helix on the green tyre in order, in a plurality of turns, to form a tyre crown hooping ply, the wavy strip having a given over length to allow the green tyre to be shaped.

6. Method according to one of the preceding claims, **characterized in that** all the components of the crown unit are laid and the green tyre is finalized before the drum (2) is collapsed.

7. Equipment (100) for implementing the method according to one of the preceding claims, the said equipment comprising a drum (2) driven in rotation about a main axis (6), the said drum being able to support a green tyre blank created by the successive laying of raw components on the external circumferential face of the drum which face is made up of segments (8) which are radially mobile between a drum-extended and a drum-collapsed position, the said drum (2) being positioned facing a ply-turning device (60) independent of the drum, the said device being able to
- turn the edges of the rubber plies laid on the drum around a bead wire using elements involving rollers (90) which are mounted with the ability to move in the axial direction on the circumferential face of the drum,
- in which each end of segment (8) comprises a longitudinal cut (40) running parallel to the axis (6), the cut being made to collaborate with a wing (45) which runs parallel to the axis (6) and is made to move in the said cut in order to lift up the edges of the rubber plies extending axially beyond the bead wires towards the ends of the drum (2) so that they can be turned over.

8. Equipment according to Claim 7, **characterized in that** it comprises an expandable drum (2) free of grooves.

9. Equipment according to one of Claims 7 and 8, **characterized in that** the said wings (45) are mounted on a lifting device (50) comprising drive means able to move the wings in an axial direction and/or in a radial direction.

10. Equipment according to Claim 9, **characterized in that** the said lifting device (50) is independent of the drum (2).

11. Equipment according to one of Claims 7 to 10, **characterized in that** the said ply-turning device (60) comprises a plurality of circumferential articulated arms (80) comprising the rollers (90), the said arms being mounted with the ability to move radially and axially with respect to the drum (2).

12. Equipment according to one of Claims 7 to 11, **characterized in that** the elements involving rollers (90) and the wings (45) are mounted on a common support able to move in longitudinal translation with respect to the drum (2) and secured to the drive means designed to move the elements involving rollers (90) and the wings in the same direction, but with a temporal offset.
